# EUROPÄISCHE PATENTANMELDUNG

(11) **EP 1 690 733 A1**
(43) Veröffentlichungstag der Anmeldung: **16.08.2006**
(21) Anmeldenummer: 05002857.0
(22) Anmeldetag: 11.02.2005
(51) Int. Cl.: B60P 3/03

(54) **Wertguttransportfahrzeug sowie Verfahren zur Lieferung und/oder Abholung von Wertgut mit einem solchen Wertguttransportfahrzeug**

(71) Anmelder: Heros Transport GmbH, 30457 Hannover (DE)
(72) Erfinder: Rensenbrink, Fred, 2593 CL F Gravenhaeg (NL)
(74) Vertreter: Patentanwälte Thömen & Körner

(57) **Zusammenfassung**

Die Erfindung betrifft ein Wertguttransportfahrzeug (10) mit drei voneinander abgeschlossenen Räumen, nämlich einem Fahrerraum (12), einem Laderaum (14) zur Aufnahme von wenigstens einem Rollcontainer (16) für Wertgutbehälter (18) sowie einem Schleusenraum (20). Erfindungsgemäß ist im Laderaum (14) eine Vorrichtung (22) zum Transport einer vorgebbaren Anzahl von Wertgutbehältern (18) aus dem Laderaum (14) in den Schleusenraum (20) und/oder aus dem Schleuseraum (20) in den Laderaum (14) durch eine in der Zwischenwand (24) von Laderaum (14) und Schleusenraum (20) angeordnete Öffnung (26) vorgesehen.

## Beschreibung

Die Erfindung betrifft ein Wertguttransportfahrzeug nach dem Oberbegriff des Anspruchs 1 sowie ein Verfahren zur Lieferung und/oder Abholung von Wertgut mit einem solchen Wertguttransportfahrzeug.

Derartige Wertguttransportfahrzeuge mit drei voneinander abgeschlossenen Räumen, nämlich einem Fahrerraum, einem Laderaum zur Aufnahme von in Rollcontainern angeordneten Wertgutbehältern sowie einem Schleusenraum, sind aus zahlreichen Veröffentlichungen bekannt. Während der Laderaum üblicherweise durch eine zwischen Laderaum und Schleusenraum angeordnete, verschließbare Tür zugänglich ist, kann der Schleusenraum durch eine zwischen Schleusenraum und Fahrerraum angeordnete Tür und/oder durch eine zwischen Schleusenraum und Fahrzeugaußenumgebung angeordnete Fahrzeugtür betreten werden. Aus der DE 102 56 638 A1 ist beispielsweise ein Wertguttransportfahrzeug bekannt, bei dem im Laderaum wenigstens ein Schrank mit Fächern zur Aufnahme von Wertgutbehältern, die Wertgut enthalten können, angeordnet ist.

Der Begriff Wertgut umfasst im Sinne der vorliegenden Erfindung alle Arten von Wertsachen, Wertpapieren und Geldern, die sich mit den in der Fachwelt bekannten Wertgutbehältern transportieren lassen.

Bei den Wertgutbehältern handelt es sich vorzugsweise um speziell gesicherte und verschließbare Transportkoffer, in denen Wertgut, das insbesondere in Geldautomatenkassetten, Safebags, P-Behältern oder dergleichen enthalten ist, transportiert werden kann.

Der Transport, die Abholung und/oder Lieferung von Wertgut wird normalerweise von Wertguttransportunternehmen mit speziellen Wertguttransportfahrzeugen durchgeführt.

Wertgut in Form von Banknoten und/oder Münzgeld wird beispielsweise für Geldautomaten benötigt, die sich üblicherweise an voneinander entfernt liegenden Standorten wie Bankfilialen, so genannten Cash-Points oder anderen zur Annahme und/oder Ausgabe von Geld autorisierten Einrichtungen befinden. Das auszugebende Geld wird in den Geldautomaten in Geldautomatenkassetten, so genannten ATM-Kassetten zur Verfügung gestellt, die in regelmäßigen Abständen oder bei aktuellem Bedarf von einem Wertguttransportunternehmen gegen gefüllte Geldkassetten ausgetauscht werden. ATM steht hierbei für Automatic Teller Machine. Die ausgewechselten leeren oder halbleeren Geldkassetten werden zu einer Zentralbank oder einem so genannten Cash Center, welches zur Annahme, Prüfung und Ausgabe von Geld autorisiert ist und sich meist an einem Standort des Wertguttransportunternehmens befindet, zurückgebracht und dort in einer sicheren Umgebung wieder aufgefüllt. Eine Manipulation beim Nachfüllvorgang ist dabei weitgehend ausgeschlossen, da üblicherweise eine Beaufsichtigung durch Kontrollpersonal in Kombination mit weiteren Überwachungsmaßnahmen wie Videoaufzeichnung vorhanden ist. Darüber hinaus sind ATM-Kassetten meist mit einem Verriegelungsmechanismus ausgestattet, der nur mit Hilfe spezieller Werkzeuge bzw. Verfahren geöffnet werden kann und daher einen Zugriff während des Transports verhindert.

Bei einem bekannten Verfahren zur Abholung von Banknoten und/oder Münzgeld aus den Geschäftsräumen eines Kunden des Wertguttransportunternehmens werden zunächst leere Wertgutbehälter in einer vorgegebenen Menge im Laderaum des Wertguttransportfahrzeugs gelagert. Die leeren Wertgutbehälter werden entweder direkt von einer Bank abgeholt oder stehen dem Wertguttransportunternehmen bereits als Vorrat zur Verfügung. Sobald das Wertguttransportfahrzeug mit leeren Wertgutbehältern ausgerüstet ist, fahren Mitarbeiter des Wertguttransportunternehmens mit dem Wertguttransportfahrzeug zu dem Kunden, um dort die im Wertguttransportfahrzeug mitgeführten leeren Wertgutbehälter gegen mit Wertgut versehene Wertgutbehälter auszutauschen. Bei jedem Kunden wird eine vorgegebene Anzahl von Wertgutbehältern ausgetauscht.

Der Austausch jedes einzelnen Wertgutbehälters erfolgt dadurch, dass ein Mitarbeiter des Wertguttransportunternehmens bei geschlossenen Wertguttransportfahrzeugtüren durch die zwischen Laderaum und Schleusenraum angeordnete, geöffnete Tür in den Laderaum eintritt, dort einen leeren Wertgutbehälter aufnimmt, daraufhin in den Schleusenraum zurückkehrt, wobei anschließend die Tür zwischen Laderaum und Schleusenraum wieder verschlossen wird. Das Öffnen und Schließen der zwischen Laderaum und Schleusenraum angeordneten Tür wird üblicherweise durch einen im abgeschlossenen Fahrerraum befindlichen Mitarbeiter des Wertguttransportunternehmens, beispielsweise den Fahrer des Wertguttransportfahrzeugs, durchgeführt.

Nachdem die zwischen Laderaum und Schleusenraum angeordnete Tür sicher verschlossen ist, kann eine zwischen Schleusenraum und der Außenumgebung des Wertguttransportfahrzeugs angeordnete Tür geöffnet werden, und der mit dem leeren Wertgutbehälter ausgerüstete Mitarbeiter kann das Wertguttransportfahrzeug verlassen.

Der Austausch des leeren Wertgutbehälters gegen einen mit Wertgut versehenen Wertgutbehälter erfolgt dann üblicherweise in den Geschäftsräumen des Kunden.

Nachdem der Mitarbeiter des Wertguttransportunternehmens den nun mit Wertgut versehenen Wertgutbehälter aufgenommen hat, tritt er wieder durch die zwischen Schleusenraum und Außenumgebung angeordnete Fahrzeugtür in den Schleusenraum ein. Sobald diese Tür sicher verschlossen ist, kann die zwischen Schleusenraum und Laderaum angeordnete Tür geöffnet werden, und der Mitarbeiter kann den mit Wertgut versehenen Wertgutbehälter im Laderaum verstauen.

Dieser Vorgang wiederholt sich solange bis die vorgegebene Anzahl von Wertgutbehältern ausgetauscht wurde. Entweder findet der gesamte Austausch der im Wertguttransportfahrzeug mitgeführten Wertgutbehälter bei nur einem Kunden statt, oder es wird zunächst eine vorgegebene Anzahl der mitgeführten Wertgutbehälter bei einem ersten Kunden ausgetauscht und anschließend eine weitere vorgegebene Anzahl der mitgeführten Wertgutbehälter bei wenigstens einem anderen Kunden ausgetauscht.

Ein derartiges Verfahren zur Lieferung und/oder Abholung von Wertgut mit einem Wertguttransportfahrzeug erfordert einen hohen zeitlichen und logistischen Aufwand und ist dementsprechend kostspielig. Die Mitarbeiter des Wertguttransportunternehmens sind außerdem nachteilig über einen längeren Zeitraum dem Risiko eines Überfalls ausgesetzt. Für den Fall, dass ein Geldautomat mit mehreren Geldautomatenkassetten beliefert werden soll, hat der hohe zeitliche Aufwand beim Transport nachteilig zur Folge, dass der Geldautomat über einen längeren Zeitraum außer Betrieb ist.

Ausgehend von diesem Stand der Technik liegt der Erfindung die Aufgabe zugrunde, ein Wertguttransportfahrzeug der eingangs genannten Art derart weiter zu entwickeln, dass die Lieferung und/oder Abholung von Wertgutmit weniger Zeitaufwand und trotzdem sicher und manipulationsfrei durchführbar ist. Der Erfindung liegt außerdem die Aufgabe zugrunde, ein Verfahren zur schnelleren Lieferung und/oder Abholung von Wertgutbehältern mit einem solchen Wertguttransportfahrzeug bereitzustellen.

Diese Aufgabe wird bei einem Wertguttransportfahrzeug der eingangs genannten Art durch die Merkmale des kennzeichnenden Teils des Anspruchs 1 gelöst. Weiterbildungen und vorteilhafte Ausgestaltungen der Erfindung ergeben sich aus den Unteransprüchen.

Erfindungsgemäß ist vorgesehen, dass bei einem Wertguttransportfahrzeug der eingangs genannten Art im Laderaum eine Vorrichtung zum Transport einer vorgebbaren Anzahl von Wertgutbehältern aus dem Laderaum in den Schleusenraum und/oder aus dem Schleusenraum in den Laderaum durch eine in der Zwischenwand von Laderaum und Schleusenraum angeordnete Öffnung vorgesehen ist, wobei die Transportvorrichtung ein durch die Öffnung verschiebbares Gebilde mit einer vorgegebenen Anzahl von Plätzen zur separaten Aufnahme der Wertgutbehälter, Mittel zum Antrieb des Gebildes, um dieses mit mindestens einem Platz aus dem Laderaum in den Schleusenraum und aus dem Schleusenraum in den Laderaum zu überführen, sowie Mittel zur Steuerung der Antriebsmittel umfasst.

Durch eine derartige im Laderaum angeordnete Transportvorrichtung wird auf überraschend einfache Weise die Lieferung und/oder Abholung von Wertgut mit weniger Zeitaufwand ermöglicht.

Für die Lieferung von Wertgut wird die Transportvorrichtung vorzugsweise vor oder während der Fahrt zu den Einsatzorten mit den für den oder die Einsatzorte vorgesehenen Wertgutbehältern bestückt.

Am Einsatzort werden dann mittels der Transportvorrichtung die nur für diese Lieferung vorgesehenen Wertgutbehälter aus dem Laderaum in den Schleusenraum überführt, ohne dass die Integrität des Laderaums angegriffen wird. Die Öffnung ist selbstverständlich nur derart groß, dass das Gebilde zusammen mit den Wertgutbehältern durch diese hindurch verschiebbar ist.

Vorteilhaft wird hierbei die sichere und schnelle Entnahme gleich mehrerer, aber auch nur dieser zur Lieferung vorgesehenen Wertgutbehälter erreicht. Umgekehrt ist in gleicher Weise das sichere und schnelle Einbringen gleich mehrerer zur Abholung vorgesehener Wertgutbehälter möglich.

Eine Weiterbildung sieht vor, dass die Transportvorrichtung über ein im Fahrerraum angeordnetes Bedienungselement steuerbar ist.

Dadurch wird das Risiko eines erfolgreichen Überfalls herabgesetzt, da die Steuerung der Transportvorrichtung weder dem mit der Entnahme der Wertgutbehälter aus der Transportvorrichtung beschäftigten Mitarbeiter noch irgendeinem Dritten zugänglich ist. Vorzugsweise sind die Wertgutbehälter in der Transportvorrichtung über einen Verriegelungsmechanismus gesichert, der nur mit Hilfe spezieller Werkzeuge bzw. Verfahren geöffnet werden kann und daher einen unbefugten Zugriff verhindert. Das Öffnen erfolgt auch hier vorzugsweise über ein im Fahrerraum angeordnetes Bedienungselement und/oder über ein GPS-Signal, das von der Einsatzzentrale des Wertguttransportunternehmens übermittelt wird.

Vorzugsweise ist das Gebilde nach Art eines Kastens ausgebildet, wobei dessen Boden die vorgegebene Anzahl von Plätzen zur separaten Aufnahme der Wertgutbehälter in Form von in Reihe angeordneten Haltern aufweist.

Vorzugsweise sind die Halter zum Schleusenraum hin kippbar, wodurch eine ergonomische und mithin schnelle Entnahme der Wertgutbehälter aus dem Gebilde ermöglicht wird.

Weiterhin ist vorgesehen, dass das Gebilde gepanzert ist, so dass kein unbefugter Zugriff auf die im Gebilde befindlichen Wertgutbehälter möglich ist.

Gemäß einer Weiterbildung der Erfindung ist im Schleusenraum ein Karren zum Transport der vorgebbaren Anzahl von Wertgutbehältern vom Schleusenraum zu einem außerhalb des Wertguttransportfahrzeugs befindlichen Ort und/oder von diesem Ort zum Schleusenraum vorgesehen, wobei der Karren eine Vorrichtung zur Sicherung der auf ihm befindlichen Wertgutbehälter gegen Diebstahl aufweist. Vorzugsweise sind die Wertgutbehälter auf dem Karren über einen Verriegelungsmechanismus gesichert, der nur mit Hilfe spezieller Werkzeuge bzw. Verfahren geöffnet werden kann und daher einen unbefugten Zugriff verhindert.

Ein unbefugter Zugriff auf die Wertgutbehälter, beispielsweise durch Gewalteinwirkung, wird vorzugsweise durch spezielle Sensoren am Wertgutbehälter registriert, die dann zeitnah ein System zum Einfärben des Wertguts, insbesondere von Banknoten, auslösen, wodurch das Wertgut unbrauchbar wird.

Der Karren umfasst vorzugsweise ein Gestell, das zur Aufnahme von mindestens vier Transportkoffern und/oder Geldkassetten ausgelegt ist. Das Gestell besitzt Räder, Griffe und Mittel zum Blockieren der Räder oder zum Fixieren des Gestells im Laderaum des Wertguttransportfahrzeugs sowie eine Vorrichtung zur Sicherung der auf dem Karren befindlichen Transportkoffer und/oder Geldkassetten gegen Diebstahl. Die Sicherungsvorrichtung ist vorzugsweise als Verriegelungsmechanismus ausgebildet, der nur mit Hilfe spezieller Werkzeuge bzw. Verfahren geöffnet werden kann und daher einen unbefugten Zugriff verhindert.

Eine vorteilhafte Ausgestaltung der Erfindung sieht vor, dass der Laderaum durch eine zwischen Laderaum und Schleusenraum angeordnete, verschließbare Tür zugänglich ist. Dadurch wird erreicht, dass eine erneute Bestückung der Transportvorrichtung am Einsatzort oder während der Fahrt möglich ist.

Zweckmäßigerweise ist gemäß einer Weiterbildung der Erfindung eine Hebebühne an einer zwischen Laderaum und Außenumgebung angeordneten, verschließbaren Tür vorgesehen. Hierdurch können die Rollcontainer im schon bestückten Zustand in den Laderaum überführt und aus diesem wieder entfernt werden.

Ein erfindungsgemäßes Verfahren zur Lieferung und/oder Abholung von Wertgutbehältern mit einem solchen erfindungsgemäßen Wertguttransportfahrzeug sieht nun vor, dass am Einsatzort eine vorgebbare Anzahl von Wertgutbehältern aus dem Laderaum in den Schleusenraum und/oder aus dem Schleusenraum in den Laderaum durch eine in der Zwischenwand von Laderaum und Schleusenraum angeordnete Öffnung des ansonsten vollständig geschlossenen Laderaums mittels einer Transportvorrichtung überführt wird, wobei die Wertgutbehälter durch eine Person manuell aus der Transportvorrichtung entnommen und/oder in diese gestellt werden und die Transportvorrichtung von einem Bereich aus gesteuert wird, der dieser Person während des Steuerungsvorgang nicht zugänglich ist.

Weitere Vorteile, Weiterbildungen und vorteilhafte Ausgestaltungen der Erfindung ergeben sich aus der nachfolgenden Erläuterung der Erfindung anhand von Ausführungsbeispielen, die in der Zeichnung dargestellt sind. In dieser zeigen:
- Fig. 1: schematisch den in den Schritten a) bis f) wiedergegebenen Verfahrensablauf beim Beladen des erfindungsgemäßen Wertguttransportfahrzeugs,
- Fig. 2: schematisch den in den Schritten a) bis j) wiedergegebenen Verfahrensablauf beim mittels des erfindungsgemäßen Wertguttransportfahrzeugs durchgeführten Geldautomaten-Service und
- Fig. 3: schematisch den in den Schritten a) bis i) wiedergegebenen Verfahrensablauf beim mittels des erfindungsgemäßen Wertguttransportfahrzeugs durchgeführten Kunden-/Banken-Service.

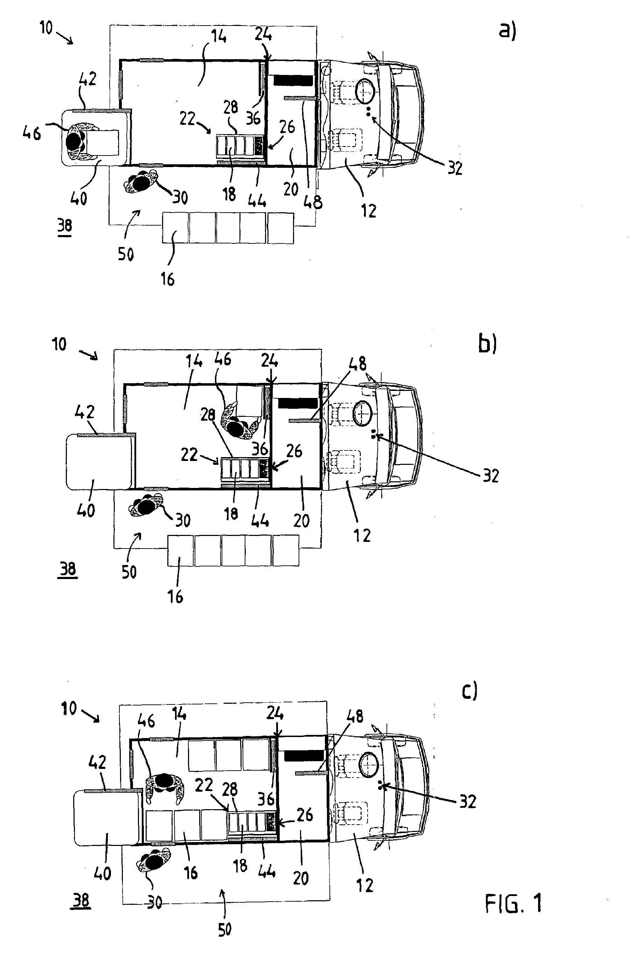

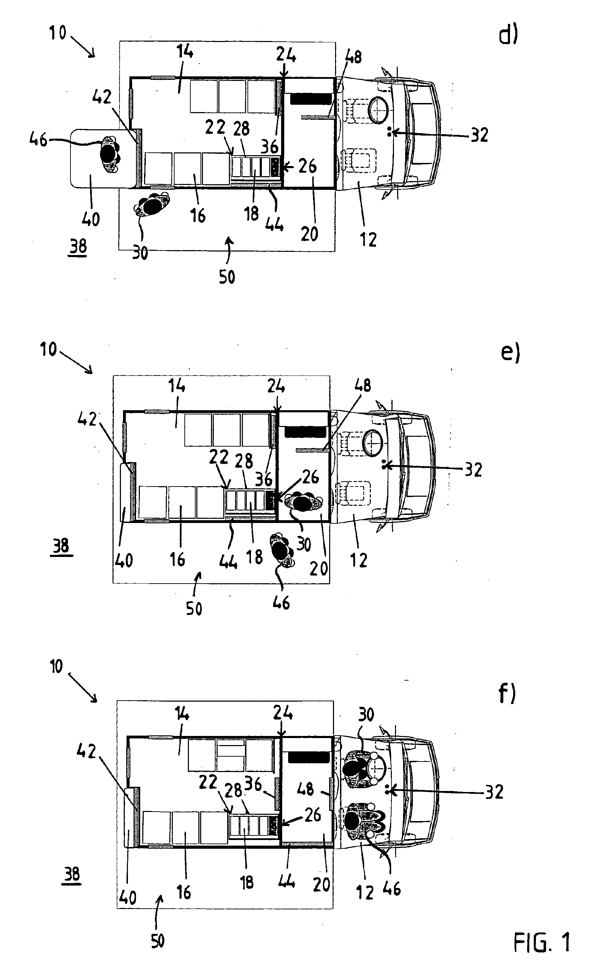

Das jeweils in den einzelnen Schritten der Fig. 1 bis 3 schematisch dargestellte Wertguttransportfahrzeug 10 umfasst drei voneinander abgeschlossene Räume, nämlich einen Fahrerraum 12, einen Laderaum 14 zur Aufnahme von Rollcontainern 16 für Wertgutbehälter 18 und einen Schleusenraum 20.

Der Laderaum 14 ist einerseits durch eine zwischen Laderaum 14 und Schleusenraum 20 angeordnete, verschließbare Tür 36 und andererseits durch eine am hinteren Teil des Wertguttransportfahrzeugs 10 zwischen Laderaum 14 und Außenumgebung 38 angeordnete, verschließbare Tür 42 zugänglich. Außerdem weist das Wertguttransportfahrzeug 10 am hinteren Teil eine Hebebühne 40 auf, über die Rollcontainer 16 durch die Tür 42 in den und aus dem Laderaum 14 transportiert werden können.

Rollcontainer 16, die sich zur Aufnahme üblicher Wertgutbehälter 18 und/oder von Wertgut eignen, sind dem Fachmann hinlänglich bekannt. So gibt es Rollcontainer 16, die achtzehn Geldautomatenkassetten, so genannte ATM-Kassetten, oder achtzehn Safebags aufnehmen können. Hierzu ist der Rollcontainer in einzelne Fächer aufgeteilt, die jeweils einen Wertgutbehälter aufnehmen können. Jedes Fach ist durch eine eigene Tür verschließbar, die vorzugsweise aus einem transparenten Kunststoff besteht und so eine freie Sicht auf den Inhalt des Faches ermöglicht.

Ferner sind Rollcontainer 16 bekannt, die Fächer zur Aufnahme von speziellen bankeigenen Wertgutbehältern 18 besitzen. Beispielweise gibt es Rollcontainer 16 zur Aufnahme von genau neun Transportkoffern der Niederländischen National Bank (Dutch National Bank - DNB).

Weiterhin gibt es so genannte Dropsafes, nämlich Rollcontainer 16, die der Aufnahme von dem Fachmann bekannten Safebags dienen. Derartige Safebags werden üblicherweise verwendet, um Wertgut von Kunden zu einem so genannten Cash-Center zu transportieren.

Als geeignet haben sich Rollcontainer 16 mit den Maßen 60 cm x 55 cm x 154 cm erwiesen.

Das Wertguttransportfahrzeug 10 kann durch eine zwischen Schleusenraum 20 und Außenumgebung 38 angeordnete Fahrzeugtür 44 verlassen oder betreten werden.

Der Fahrerraum 12 kann durch eine zwischen Fahrerraum 12 und Schleusenraum 20 angeordnete, verschließbare Tür 48 verlassen und betreten werden.

Erfindungsgemäß ist im Laderaum 14 eine Vorrichtung 22 zum Transport einer vorgebbaren Anzahl von Wertgutbehältern 18 aus dem Laderaum 14 in den Schleusenraum 20 und/oder aus dem Schleusenraum 20 in den Laderaum 14 durch eine in der Zwischenwand 24 von Laderaum 14 und Schleusenraum 20 angeordnete Öffnung 26 vorgesehen.

Die Transportvorrichtung 22 umfasst hierzu ein durch die Öffnung 26 verschiebbares, nach Art eines Kastens ausgebildetes und gepanzertes Gebilde 28 mit fünf in Reihe angeordneten Haltern zur Aufnahme von fünf Wertgutbehältern 18. Die hier nicht dargestellten Halter sind auf dem Boden des Gebildes 28 angeordnet und vorzugsweise zum Schleusenraum 20 kippbar. Durch die Kippbarkeit wird die Ergonomie wesentlich verbessert. Selbstverständlich ist die Öffnung 26 nur derart groß, dass im Wesentlichen nur das Gebilde 28 mit den Wertgutbehältern 18 durch diese Öffnung 26 verschiebbar ist.

Die Öffnung 26 ist vorzugsweise zusätzlich durch eine hier nicht dargestellte Tür verschließbar, wobei der Schließzustand der Tür besonders bevorzugt vom Fahrerraum 12 oder einem außerhalb des Wertguttransportfahrzeugs 10 befindlichen Ort, insbesondere einer Einsatzentrale des Wertguttransportunternehmens, über GPS steuerbar ist.

Die Transportvorrichtung 22 umfasst weiterhin hier nicht dargestellte Mittel zum Antrieb des Gebildes 28, um dieses mit mindestens einem Wertgutbehälter 18 aus dem Laderaum 14 in den Schleusenraum 20 und aus dem Schleusenraum 20 in den Laderaum 14 zu überführen. Als Mittel dienen bevorzugt hydraulische oder pneumatische Zylinder. Alternativ hierzu ist vorzugsweise ein Elektromotor einsetzbar. Die Positionbestimmung des Gebildes 28 ist beispielsweise durch hier nicht dargestellte Sensoren möglich.

Ferner weist die Transportvorrichtung 22 noch Mittel zur Steuerung der Antriebsmittel auf. Diese Mittel umfasst auch ein im Fahrerraum 12 angeordnetes Bedienungselement 32, über das die Transportvorrichtung 22 steuerbar ist. Die Steuerbarkeit der Transportvorrichtung 22 ist vorzugsweise nur durch eine Autorisation möglich.

Gleiche in den Fig.1 bis 3 verwendete Bezugszeichen bezeichnen gleiche Teile, auch wenn diese in der nachfolgenden Beschreibung nicht explizit genannt sind.

Fig. 1 zeigt nun schematisch den in den Schritten a) bis f) wiedergegebenen Verfahrensablauf beim Beladen des erfindungsgemäßen Wertguttransportfahrzeugs 10. Das Wertguttransportfahrzeug 10 befindet sich hierzu in einem vorgegebenen Bereich 50 eines Cash-Centers des Wertguttransportunternehmens.

Wie in den Schritten a) bis f) gezeigt, überführen zwei Mitarbeiter 30, 46 sechs Rollcontainer 16 in den Laderaum 14 des Wertguttransportfahrzeugs 10. Die Türen 36, 42 und 44 sind hierzu von einer hier nicht dargestellten, außerhalb des Fahrzeugs befindlichen Einsatzzentrale des Wertguttransportunternehmens über GPS freigegeben und können entsprechend geöffnet werden.

Wie in a) dargestellt, stehen die für die Beladung des Wertguttransportfahrzeugs 10 vorgesehenen Rollcontainer 16 zunächst vor dem Wertguttransportfahrzeug 10 bereit. Einer der Rollcontainer 16 ist von einem Mitarbeiter 46 bereits auf der Hebebühne 40 positioniert worden und wird als nächstes, wie in b) dargestellt, durch die geöffnete Tür 42 in den Laderaum 14 überführt. Dort wird der Rollcontainer 16 verankert und mittels eines hier nicht dargestellten mechanischen Schlosses gesichert. Dies wiederholt sich, bis alle Rollcontainer 16 im Laderaum 14 verstaut sind. Dieser Zustand ist in c) dargestellt. In d) wird nun als nächstes die Tür 42 verschlossen und von der Zentrale über Funk gegen unbefugtes Öffnen gesperrt. Anschließend wird - wie in e) ersichtlich - die Hebebühne 40 in eine vertikale, die Tür 42 verdeckende Position verfahren. Anschließend steigen beide Mitarbeiter 30, 46 in das Wertguttransportfahrzeug 10 ein, verschließen die noch offenen Türen 36 und 42, nehmen im Fahrerraum 12 Platz und verschließen auch die Tür 48. Dieser Zustand ist in f) dargestellt. Das Wertguttransportfahrzeug 10 ist nun abfahrbereit.

Es besteht die Möglichkeit, dass ein Mitarbeiter 30, 46 bereits beim Beladevorgang, insbesondere in b) und c), aber auch zwischen e) und f) die erfindungsgemäße Transportvorrichtung 20 mit den für den oder für die ersten Einsatzorte erforderlichen Wertgutbehältern 18 bestückt. Je nach Auftrag können die Wertgutbehälter 18 Wertgut enthalten oder leer sein. Die Wertgutbehälter 18 sind vorzugsweise als speziell gesicherte Transportkoffer ausgebildet, in denen das Wertgut unverpackt, aber auch seinerseits verpackt in Wertgutbehältern 18, vorzugsweise in Geldautomatenkassen oder so genannten Safebags, enthalten sein kann. Bei den Transportkoffern kann es sich beispielsweise um solche der Firma Spinnaker Ltd. handeln, welche unter der Bezeichnung i-Box® vertrieben werden.

Nachdem das Wertguttransportfahrzeug 10 beladen wurde, verlässt es das Cash-Center in Richtung Einsatzort. Sollte die Transportvorrichtung 20 noch nicht beim Beladevorgang bestückt worden sein, besteht die Möglichkeit, dies nun vorzugsweise während der Fahrt zum Einsatzort vorzunehmen. Dazu werden die Türen 48 und 36 vom Fahrerraum aus geöffnet, so dass der Mitarbeiter 46 den Laderaum 14 betreten kann. Nach Durchführung der Bestückung kehrt der Mitarbeiter 46 in den Fahrerraum 12 zurück und die Türen 36 und 48 werden wieder geschlossen. Zwar ist prinzipiell die Bestückung auch am Einsatzort möglich, dies würde aber einen Zeitverlust bei der Lieferung und/oder Abholung von Wertgut mit sich bringen, der ja gerade mit dem erfindungsgemäßen Wertguttransportfahrzeug 10 vermieden werden soll.

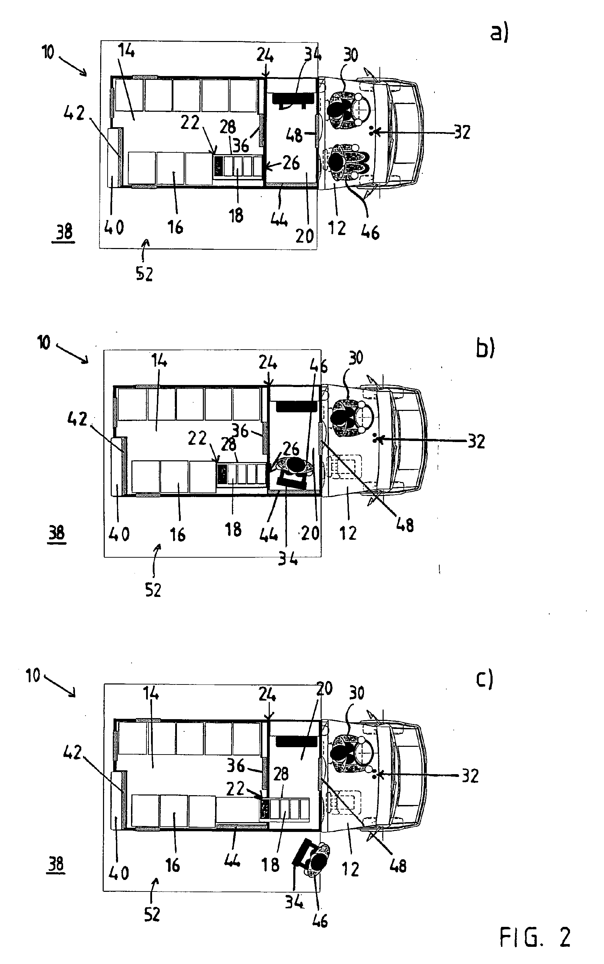

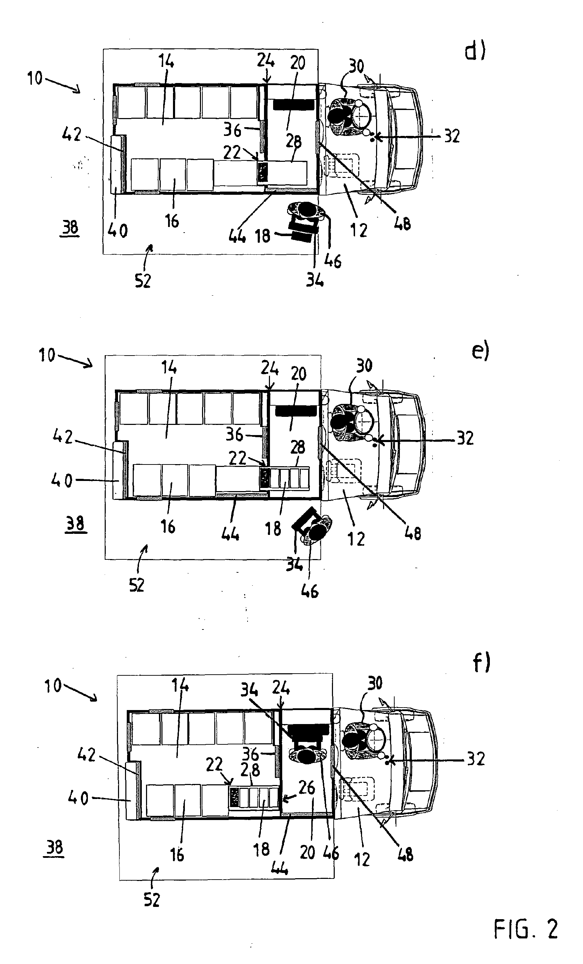

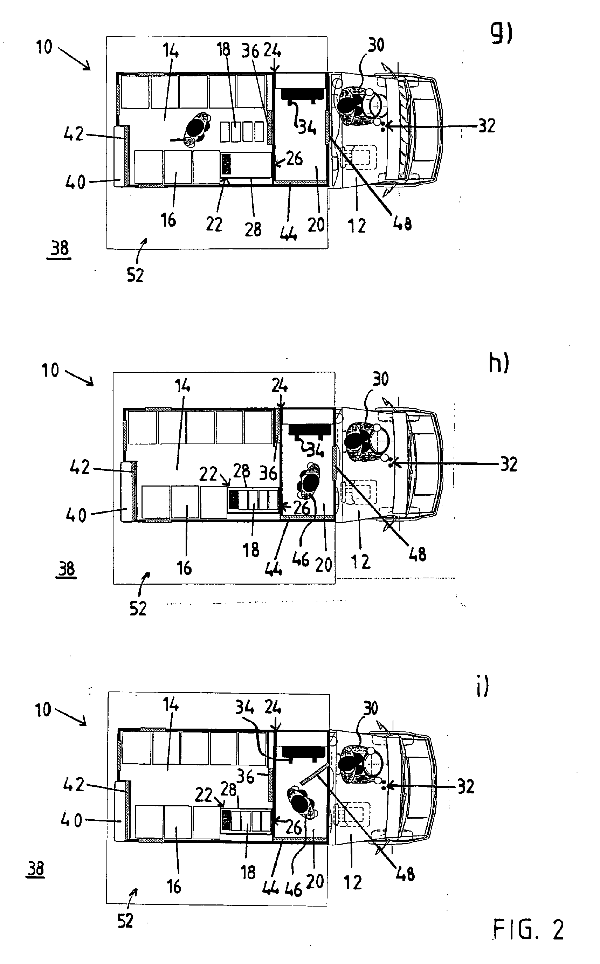

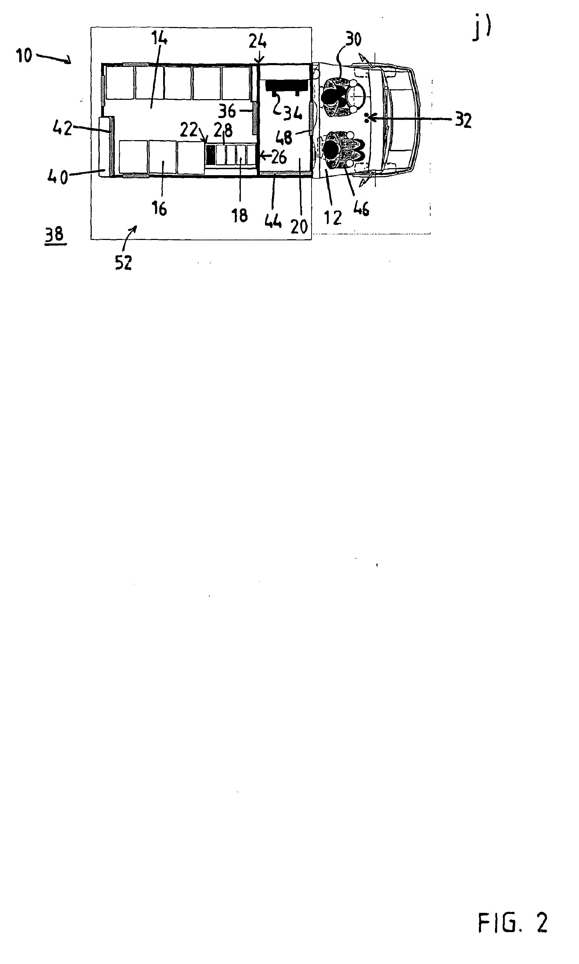

In Fig. 2 ist nun schematisch der in den Schritten a) bis j) wiedergegebene Verfahrensablauf beim mittels des erfindungsgemäßen Wertguttransportfahrzeugs 10 durchgeführten Geldautomaten-Service dargestellt.

Wie in a) dargestellt, hält das Wertguttransportfahrzeug 10 in einem vorgegebenen Bereich 52 am hier nicht dargestellten Geldautomaten. Anschließend wird die Tür 48 von einem Mitarbeiter 30, 46 geöffnet, so dass der Mitarbeiter 46 aus dem Fahrerraum 12 in den Schleusenraum 20 treten kann, woraufhin die Tür 48 wieder vom Mitarbeiter 30 verschlossen wird. Der Mitarbeiter 46 nimmt sich nun einen im Schleusenraum 20 angeordneten und für den Transport der Wertgutbehälter 18 vorgesehenen Karren 34. Dieser Zustand ist in b) dargestellt. Daraufhin wird die Tür 44 vom Fahrerraum 12 aus durch den dort befindlichen Mitarbeiter 30 geöffnet, so dass der Mitarbeiter 46 mit der Karre 34 aus dem Wertguttransportfahrzeug 10 in die Außenumgebung 38 treten kann. Wie in c) dargestellt, wird als nächstes vom Fahrerraum 12 aus durch den dort befindlichen Mitarbeiter 30 die Transportvorrichtung 20 über das Bedienungselement 32 gesteuert, derart, dass das Gebilde 28 mit einer vorgegebenen Anzahl von Wertgutbehältern 18 in den Schleusenraum 20 verschoben wird. Im dargestellten Fall wird das Gebilde 28 derart weit in den Schleusenraum 20 verschoben, dass sich dort vier Wertgutbehälter 18, die Geldautomatenkassetten enthalten, befinden. Wie in d) gezeigt, werden diese vier Wertgutbehälter 18 vom Mitarbeiter 46 aus dem Gebilde 28 entnommen, auf den Karren 34 gelegt und mittels einer Vorrichtung gegen Diebstahl gesichert. Anschließend wird die Tür 44 vom Fahrerraum 12 aus durch den dort befindlichen Mitarbeiter 30 wieder verschlossen. Daraufhin werden die vier Wertgutbehälter 18 mit dem Karren 34 zum Geldautomaten transportiert und dort gegen alte Wertgutbehälter 18 ausgetauscht. Der Mitarbeiter 46 kommt nun mit diesen alten, auf dem Karren 34 befindlichen Wertgutbehältern 18 zurück zum Wertguttransportfahrzeug 10. Der im Fahrerraum befindliche Mitarbeiter 30 öffnet daraufhin vom Fahrerraum 12 aus die Tür 44, woraufhin der Mitarbeiter 46 die alten Wertgutbehälter 18 in das noch im Schleusenraum 20 befindliche Gebilde 28 stellt. Dieser Zustand ist in e) dargestellt. Daraufhin wird vom Fahrerraum 12 aus durch den dort befindlichen Mitarbeiter 30 die Transportvorrichtung 20 über das Bedienungselement 32 gesteuert, derart, dass das Gebilde 28 wieder vollständig in den Laderaum 14 verschoben wird. Der Mitarbeiter 46 stellt danach den Karren 34 in den Schleusenraum 20 und tritt selbst in diesen ein, wobei anschließend die Tür 44 vom Fahrerraum 12 aus durch den dort befindlichen Mitarbeiter geschlossen wird. Der Mitarbeiter 46 stellt den Karren 34 an einem vorgegebenen Platz im Schleusenraum 20 ab. Dies ist in f) dargestellt. Anschließend tritt der Mitarbeiter 46 durch die von dem im Fahrerraum 12 befindlichen Mitarbeiter 30 geöffnete Tür 36 in den Laderaum 14 ein, woraufhin die Tür 36 von dem im Fahrerraum 12 befindlichen Mitarbeiter 30 wieder verschlossen wird. Der im Laderaum 14 befindliche Mitarbeiter 46 entnimmt nun - wie in g) gezeigt - die alten Wertgutbehälter 18 aus dem Gebilde 28 der Transportvorrichtung 20. Danach werden neue für den oder die nächsten Einsatzorte vorgesehene Wertgutbehälter 18 aus einem oder mehreren Rollcontainern 16 entnommen und in die Transportvorrichtung 20 gestellt. Die alten Wertgutbehälter 18 werden vom Mitarbeiter 46 in vorgegebene Fächer der Rollcontainer 16 überführt. Nachfolgend tritt der Mitarbeiter 46 durch die von dem im Fahrerraum 12 befindlichen Mitarbeiter 30 geöffnete Tür 36 in den Schleusenraum 20. Dieser Zustand ist in h) dargestellt. Wie in i) dargestellt, schließt der im Fahrerraum 12 befindliche Mitarbeiter 30 anschließend die Tür 36 und öffnet die Tür 48, so dass der Mitarbeiter 46 wieder in den Fahrerraum 12 eintreten kann, woraufhin die Tür 48 wieder geschlossen wird. Das Wertguttransportfahrzeug 10 ist - wie j) zeigt - wieder abfahrbereit und kann zum nächsten Einsatzort abfahren.

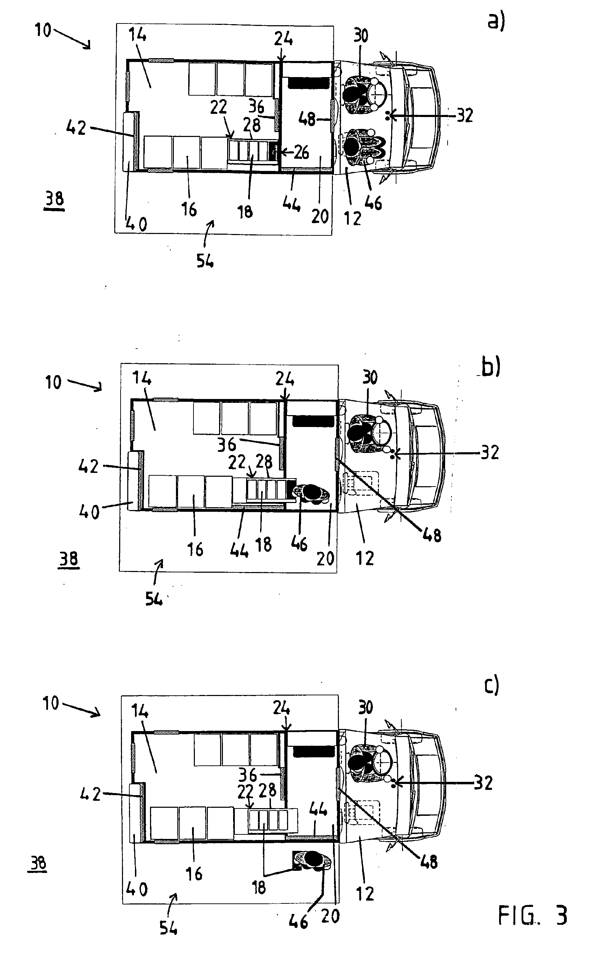

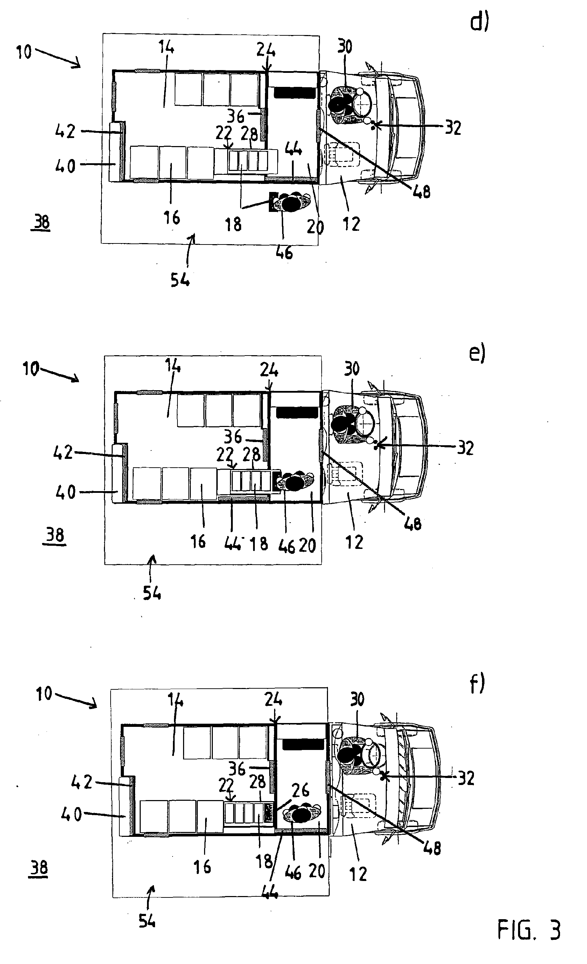

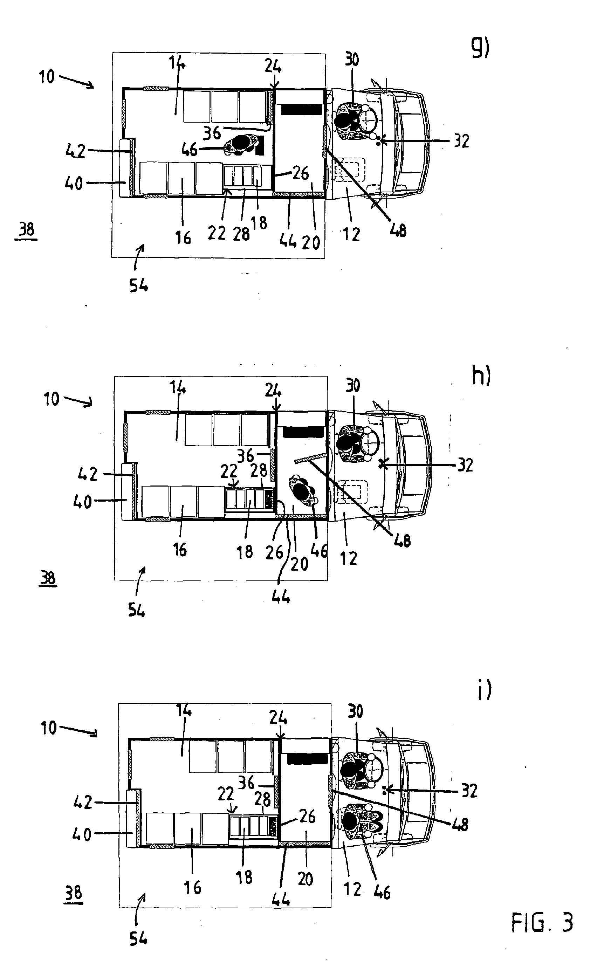

In Fig. 3 ist nun schematisch der in den Schritten a) bis i) wiedergegebene Verfahrensablauf beim mittels des erfindungsgemäßen Wertguttransportfahrzeugs durchgeführten Kunden/Banken-Service dargestellt.

Wie in a) dargestellt, hält das Wertguttransportfahrzeug 10 in einem vorgegebenen Bereich 54 vor den hier nicht dargestellten Geschäftsräumen eines Kunden oder einer Bank. Anschließend wird die Tür 48 von einem Mitarbeiter 30, 46 geöffnet, so dass der Mitarbeiter 46 aus dem Fahrerraum 12 in den Schleusenraum 20 treten kann, woraufhin die Tür 48 wieder vom Mitarbeiter 30 verschlossen wird. Daraufhin wird - wie in b) dargestellt - die Tür 44 vom Fahrerraum 12 aus durch den dort befindlichen Mitarbeiter 30 geöffnet und die Transportvorrichtung 20 über das Bedienungselement 32 gesteuert, derart, dass das Gebilde 28 mit einer vorgegebenen Anzahl von Wertgutbehältern 18 in den Schleusenraum 20 verschoben wird. Im dargestellten Fall wird das Gebilde 28 derart weit in den Schleusenraum 20 verschoben, dass sich dort nur ein Wertgutbehälter 18 befindet. Wie Schritt c) zeigt, wird dieser Wertgutbehälter vom Mitarbeiter 46 aus dem Gebilde 18 entnommen. Der Mitarbeiter 46 tritt mit dem aufgenommenen Wertgutbehälter 18 aus dem Schleusenraum 20 in die Außenumgebung 38, woraufhin die Tür 44 vom Fahrerraum 12 aus durch den dort befindlichen Mitarbeiter 30 wieder verschlossen wird. Daraufhin wird der Wertgutbehälter 18 in die Geschäftsräume des Kunden oder der Bank transportiert und dort gegen einen anderen Wertgutbehälter 18 ausgetauscht oder dort mit Wertgut gefüllt bzw. geleert. Der Mitarbeiter 46 kehrt nun - wie in d) dargestellt, mit diesen Wertgutbehälter 18 zum Wertguttransportfahrzeug 10 zurück. Der im Fahrerraum befindliche Mitarbeiter 30 öffnet daraufhin vom Fahrerraum 12 aus die Tür 44, woraufhin der Mitarbeiter 46 den Schleusenraum 20 betritt und den Wertgutbehälter 18 in das noch im Schleusenraum 20 befindliche Gebilde 28 stellt. Dieser Zustand ist in e) dargestellt. Als nächstes wird vom Fahrerraum 12 aus durch den dort befindlichen Mitarbeiter 30 die Transportvorrichtung 20 über das Bedienungselement 32 gesteuert, derart, dass das Gebilde 28 wieder vollständig in den Laderaum 14 verschoben wird. Anschließend wird die Tür 44 vom Fahrerraum 12 aus durch den dort befindlichen Mitarbeiter 30 geschlossen. Dieser Zustand ist in f) dargestellt. Anschließend tritt der Mitarbeiter 46 durch die von dem im Fahrerraum 12 befindlichen Mitarbeiter 30 geöffnete Tür 36 in den Laderaum 14 ein, woraufhin die Tür 36 von dem im Fahrerraum 12 befindlichen Mitarbeiter 30 wieder verschlossen wird. Der im Laderaum 14 befindliche Mitarbeiter 46 entnimmt nun - wie in g) gezeigt - den kurz zuvor abgeholten Wertgutbehälter 18 aus dem Gebilde 28 der Transportvorrichtung 20. Daraufhin wird ein für den nächsten Einsatzort vorgesehener Wertguttransportbehälter 18 aus einem Rollcontainer 16 entnommen und in die Transportvorrichtung 20 gestellt. Der zuvor aus dem Gebilde 28 entnommene Wertgutbehälter 18 wird vom Mitarbeiter 46 in ein vorgegebenes Fach eines Rollcontainers 16 überführt. Daraufhin tritt der Mitarbeiter 46 durch die von dem im Fahrerraum 12 befindlichen Mitarbeiter 30 geöffnete Tür 36 in den Schleusenraum 20. Wie in h) dargestellt, schließt der im Fahrerraum 12 befindliche Mitarbeiter 30 anschließend die Tür 36 und öffnet die Tür 48, so dass der Mitarbeiter 46 wieder im Fahrerraum 12 eintreten kann, woraufhin die Tür 48 geschlossen wird. Das Wertguttransportfahrzeug 10 ist dann - wie i) zeigt - abfahrbereit und kann zum nächsten Einsatzort abfahren.

### Bezugszeichenliste (ist Bestandteil der Beschreibung)

- 10: Wertguttransportfahrzeug
- 12: Fahrerraum
- 14: Laderaum
- 16: Rollcontainer
- 18: Wertgutbehälter
- 20: Schleusenraum
- 22: Transportvorrichtung
- 24: Zwischenwand
- 26: Öffnung
- 28: Gebilde
- 30: Mitarbeiter
- 32: Bedienungselement
- 34: Karren
- 36: Tür
- 38: Außenumgebung
- 40: Hebebühne
- 42: Tür
- 44: Tür
- 46: Mitarbeiter
- 48: Tür
- 50: Bereich
- 52: Bereich
- 54: Bereich

## Patentansprüche

1. Wertguttransportfahrzeug (10) mit drei voneinander abgeschlossenen Räumen, nämlich einem Fahrerraum (12), einem Laderaum (14) zur Aufnahme von wenigstens einem Rollcontainer (16) für Wertgutbehälter (18) sowie einem Schleusenraum (20), **dadurch gekennzeichnet, dass** im Laderaum (14) eine Vorrichtung (22) zum Transport einer vorgebbaren Anzahl von Wertgutbehältern (18) aus dem Laderaum (14) in den Schleusenraum (20) und/oder aus dem Schleusenraum (20) in den Laderaum (14) durch eine in der Zwischenwand (24) von Laderaum (14) und Schleusenraum (20) angeordnete Öffnung (26) vorgesehen ist, wobei die Transportvorrichtung (22) ein durch die Öffnung (26) verschiebbares Gebilde (28) mit einer vorgegebenen Anzahl von Plätzen (30) zur separaten Aufnahme der Wertgutbehälter (18), Mittel zum Antrieb des Gebildes (28), um dieses mit mindestens einem Platz aus dem Laderaum (14) in den Schleusenraum (20) und aus dem Schleusenraum (20) in den Laderaum (14) zu überführen, sowie Mittel zur Steuerung der Antriebsmittel umfasst.

2. Wertguttransportfahrzeug (10) nach Anspruch 1, **dadurch gekennzeichnet, dass** die Transportvorrichtung (22) über ein im Fahrerraum (12) angeordnetes Bedienungselement (32) steuerbar ist.

3. Wertguttransportfahrzeug (10) nach Anspruch 1 oder 2, **dadurch gekennzeichnet, dass** das Gebilde (28) nach Art eines Kastens ausgebildet ist, wobei dessen Boden die vorgegebene Anzahl von Plätzen (30) zur separaten Aufnahme der Wertgutbehälter (18) in Form von in Reihe angeordneten Haltern aufweist.

4. Wertguttransportfahrzeug (10) nach Anspruch 3, **dadurch gekennzeichnet, dass** die Halter zum Schleusenraum (20) hin kippbar sind.

5. Wertguttransportfahrzeug (10) nach einem der Ansprüche 1 bis 4, **dadurch gekennzeichnet, dass** das Gebilde (28) gepanzert ist.

6. Wertguttransportfahrzeug (10) nach einem der Ansprüche 1 bis 5, **dadurch gekennzeichnet, dass** im Schleusenraum (20) ein Karren (34) zum Transport der vorgebbaren Anzahl von Wertgutbehältern (18) vom Schleusenraum (20) zu einem außerhalb des Wertguttransportfahrzeugs (10) befindlichen Ort und/oder von diesem Ort zum Schleusenraum (20) vorgesehen ist, wobei der Karren (34) eine Vorrichtung zur Sicherung der auf ihm befindlichen Wertgutbehälter (18) gegen Diebstahl aufweist..

7. Wertguttransportfahrzeug (10) nach einem der Ansprüche 1 bis 6, **dadurch gekennzeichnet, dass** der Laderaum (14) durch eine zwischen Laderaum (14) und Schleusenraum (20) angeordnete, verschließbare Tür (36) zugänglich ist.

8. Wertguttransportfahrzeug (10) nach einem der Ansprüche 1 bis 7, **dadurch gekennzeichnet, dass** eine Hebebühne (40) an einer zwischen Laderaum (14) und Außenumgebung (38) angeordneten, verschließbaren Tür (42) vorgesehen ist.

9. Verfahren zur Lieferung und/oder Abholung von Wertgutbehältern (18) mit einem Wertguttransportfahrzeug (10) nach einem der Ansprüche 1 bis 8, **dadurch gekennzeichnet, dass** am Einsatzort eine vorgebbare Anzahl von Wertgutbehältern (18) aus dem Laderaum (14) in den Schleusenraum (20) und/oder aus dem Schleusenraum (20) in den Laderaum (14) durch eine in der Zwischenwand (24) von Laderaum (14) und Schleusenraum (20) angeordnete Öffnung (26) des ansonsten vollständig geschlossenen Laderaums (14) mittels einer Transportvorrichtung (22) überführt wird, wobei die Wertgutbehälter (18) durch eine Person manuell aus der Transportvorrichtung (22) entnommen und/oder in diese gestellt werden und die Transportvorrichtung (22) von einem Bereich aus gesteuert wird, der dieser Person während des Steuerungsvorgang nicht zugänglich ist.
